Europäisches Patentamt

European Patent Office

Office européen des brevets

(11) Veröffentlichungsnummer: **0 204 654**
**B1**

(12) **EUROPÄISCHE PATENTSCHRIFT**

(45) Veröffentlichungstag der Patentschrift: **25.07.90**

(51) Int. Cl.⁵: **B 23 B 31/12**

(21) Anmeldenummer: **86810166.8**

(22) Anmeldetag: **09.04.86**

(54) **Bohrfutter für Handwerkzeuge.**

(30) Priorität: **07.06.85 DE 3520324**

(43) Veröffentlichungstag der Anmeldung:
**10.12.86 Patentblatt 86/50**

(45) Bekanntmachung des Hinweises auf die
Patenterteilung:
**25.07.90 Patentblatt 90/30**

(84) Benannte Vertragsstaaten:
**CH DE FR GB LI NL**

(56) Entgegenhaltungen:
**GB-A-2 103 988**
**US-A-2 544 088**

(73) Patentinhaber: **HILTI Aktiengesellschaft**
**FL-9494 Schaan (LI)**

(72) Erfinder: **Wezel, Erich**
**In der Bitze 11**
**D-7443 Frickenhausen (DE)**

(74) Vertreter: **Wildi, Roland**
**Hilti Aktiengesellschaft Patentabteilung**
**FL-9490 Schaan (LI)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ausgehend vom Stand der Technik gemäß US—A—2 544 088 ein Bohrfutter zur Aufnahme von Werkzeugen in Handgeräten wie Schlagbohrmaschinen, Bohrhämmern und dgl. nach dem Oberbegriff gemäss Patentanspruch 1.

Bei Bohrfuttern, welche gleichzeitig Dreh- und Schlagbewegungen auf das Werkzeug übertragen, unterscheidet man zwei verschiedene Spannarten.

Beim formschlüssigen Spannen entsprechend GB—A—2 103 988 weist das Einsteckende des Werkzeuges Vertiefungen oder Vorsprünge auf, an welchen die Spannbacken teilweise formschlüssig angreifen. Bei dieser Spannart kann zwischen den Spannbacken und dem Einsteckende radiales Spiel entstehen, so dass das Werkzeug im Bohrfutter eine begrenzte axiale Beweglichkeit aufweist.

Beim kraftschlüssigen Spannen weist das Einsteckende keine Vertiefungen oder Vorsprünge auf und ist somit glatt ausgebildet. Die Spannbakken werden beim Spannen durch den Mechanismus des Bohrfutters radial gegen den Schaft des Einsteckendes gepresst. Die Uebertragung des Drehmomentes sowie die axiale Halterung des Werkzeuges erfolgt somit nur durch Reibkräfte, die von der aufgebrachten Spannkraft abhängig sind. Um bei den im Betrieb auftretenden Vibrationen ein Lösen des Werkzeuges zu verhindern, muss diese Spannkraft sehr gross sein.

Bei den bisher bekannten Spannfuttern für Bohrhämmer, Schlagbohrmaschinen und dergleichen sind deshalb zum kraftschlüssigen Spannen Hilfswerkzeuge notwendig, um die erforderliche Spannkraft aufzubringen. Diese Hilfswerkzeuge sind beispielsweise als Zahnkranzschlüssel ausgebildet, welche mit einer an der Stellhülse angeordneten Verzahnung in Eingriff bringbar sind, was umständlich und zeitaufwendig sein kann. Ferner ist es möglich, den Schlüssel steckenzulassen, so dass er bei Inbetriebnahme des Handwerkzeuges eine erhebliche Verletzungsgefahr darstellt. Hat die Bedienungsperson den Schlüssel verlegt oder verloren, so muss für das Wechseln des Werkzeuges wieder ein neuer Schlüssel beschafft werden, was das Weiterarbeiten mit dem Gerät erheblich verzögert. Ohne Hilfswerkzeuge betätigbare, kraftschlüssige Schnellspann-Bohrfutter konnten sich bei Bohrhämmern, Schlagbohrmaschinen und dergleichen bis jetzt nicht durchsetzen, weil sie einerseits konstruktiv sehr aufwendig und somit aus wirtschaftlichen Gründen nicht tragbar sind. Andererseits sind die damit erreichbaren Spannkräfte zu stark vom im Betrieb auftretenden Drehmoment abhängig, so dass das Werkzeug entweder zuwenig fest gespannt ist oder das Futter sich nur mittels Werkzeugen wieder öffnen lässt.

Aus der US—A—2 544 088 ist ein Bohrfutter bekannt, dessen Stellhülse mittels eines ein- und auskuppelbaren Kupplungsgliedes über das Gewinde mit dem Futterkörper verbindbar ist und das Gewinde eine geringe Steigung aufweist.

Das Gewinde dieses Futters ist vorzugsweise als sogenanntes Feingewinde ausgebildet. Ein solches Feingewinde weist gegenüber einem normalen Gewinde eine kleinere Steigung und somit auch einen geringeren Steigungswinkel auf. Durch das ein- und auskuppelbare Kupplungsglied ist eine Schnellverstellung des Bohrfutters zur Anpassung der Spannbacken an den Schaftdurchmesser des Werkzeuges möglich. Nach dem Auskuppeln des Kupplungsgliedes ist die Stellhülse gegenüber dem Futterkörper axial verschiebbar. In der gewünschten Stellung wird das Kupplungsglied wiederum eingekuppelt und die Stellhülse somit über das Gewinde mit dem Futterkörper verbunden.

Beim kraftschlüssigen Spannen eines Werkzeuges können im Bohrfutter erhebliche Kräfte auftreten. Zur Aufteilung dieser Kräfte weist das Kupplungsglied mehrere, in das Gewinde ein- und aus diesem ausrückbare Gewindesegmente auf. Diese Gewindesegmente sind gleichmässig über den Umfang des Futterkörpers verteilt angeordnet und werden durch Federelemente mit dem Gewinde des Futterkörpers im Eingriff gehalten.

Nach dem Ausrücken der Gewindesegmente gegen die Kraft der Federelemente können die Stellhülse und die damit verbundene Führungshülse axial verschoben und die Spannbacken somit radial verstellt werden. Diese bekannte Lösung ist sowohl in der Herstellung als auch in der Montage höchst aufwendig, da sie viele Teile wie Spannbacken, Gelenke und Hebel zum Ein- und Ausrücken der Spannbacken aufweist.

Der Erfindung liegt die Aufgabe zugrunde, ein Bohrfutter zur form- und kraftschlüssigen Aufnahme von Werkzeugen in Handgeräten wie Schalgbohrmaschinen, Bohrhämmern und der gleichen zu schaffen, das einfach in der Herstellung und Montage sowie sicher im Betrieb ist.

Gemäss der Erfindung wird dies dadurch erreicht, dass das Kupplungsglied hülsenförmig ausgebildet ist und durch teilweise Längsschlitzung als Federelement wirkende Finger mit den Gewindesegmenten an deren freien Enden gebildet sind, wobei die Gewindesegmente durch die Federelemente aus dem Gewinde des Futterkörpers ausgerückt gehalten werden und die Stellhülse und das Kupplungsglied miteinander zusammenwirkende Nocken und Steurflächen aufweisen.

Das Kupplungsglied ist somit nach Art einer Spannzange ausgebildet. Die Gewindesegmente sind einstückig miteinander verbunden, was insbesondere auch für deren Herstellung sowie für die Montage vorteilhaft ist. Durch die federnde Ausbildung des Kupplungsgliedes sind keine zusätzlichen Federelemente notwendig. Dies bedeutet ebenfalls eine wesentliche Vereinfachung bei der Montage. Das Ein- und Auskuppeln des Kupplungsgliedes kann beispielsweise durch eine Relativverdrehung der Stellhülse gegenüber dem Futterkörper erfolgen, wobei Nocken auch die Verdrehbarkeit des Kupplungsgliedes gegenüber der Stellhülse begrenzen.

Mittels der Steuerflächen können die Kupplungsglieder gleichzeitig oder nacheinander mit dem Gewinde des Futterkörpers in Eingriff gebracht werden. Durch entsprechende Gestaltung der Steuerflächen kann erreicht werden, dass der Gewindeeingriff kontinuierlich erfolgt, wodurch ein Verklemmen, beispielsweise infolge von aufeinanderstehenden Gewindegängen, verhindert wird. Die Steuerflächen können am Kupplungsglied selbst oder an der Stellhülse angeordnet sein.

Zur Sicherstellung der für die Betätigung des Kupplungsgliedes erforderlichen Relativbewegung zwischen Kupplungsglied und Stellhülse ist vorteilhafterweise eine bei ausgekuppeltem Kupplungsglied mit der Führungshülse in Eingriff tretende Verbindungseinrichtung vorgesehen. Eine solche Verbindungseinrichtung muss keine grossen Kräfte übertragen können und kann daher sehr klein dimensioniert werden. Die Verbindungseinrichtung kann beispielsweise als Reibkupplung ausgebildet werden. Bei eingekuppeltem Kupplungsglied ist die Verbindungseinrichtung ausser Funktion gesetzt.

Bei der Betätigung des Kupplungsgliedes muss die Verbindungseinrichtung mit der Führungshülse interbrochen und das Kupplungsglied mit dem Futterkörper eingekuppelt werden. Dabei kann eine gewisse Ueberschneidung nützlich sein. Es ist daher zweckmässig, die Verbindungseinrichtung am Kupplungsglied und an der Führungshülse als in axialer Richtung verlaufende Verzahnung auszubilden, beispielsweise nach Art einer Kerbverzahnung.

Infolge der geringen Steigung des Gewindes genügt im allgemeinen das an der Stellhülse von Hand aufbringbare Drehmoment zum Festspannen des Werkzeuges. Zur Erhöhung des Bedienungskomforts kann jedoch die Stellhülse mit Angriffsmitteln wie Ausnehmungen, Nocken oder dgl. versehen werden, an welchen zusätzliche Hilfsmittel angreifen können.

Die Erfindung soll nachstehend anhand der sie beispielsweise wiedergebenden Zeichnungen erläutert werden. Es zeigen:

Fig. 1 ein erfindungsgemässes Bohrfutter, im Längschnitt;

Fig. 2 einen Querschnitt durch das Bohrfutter gemäss Fig. 1, entlang der Linie II—II;

Fig. 3 einen Ausschnitt des Bohrfutters gemäss Fig. 1, in ausgekuppeltem Zustand.

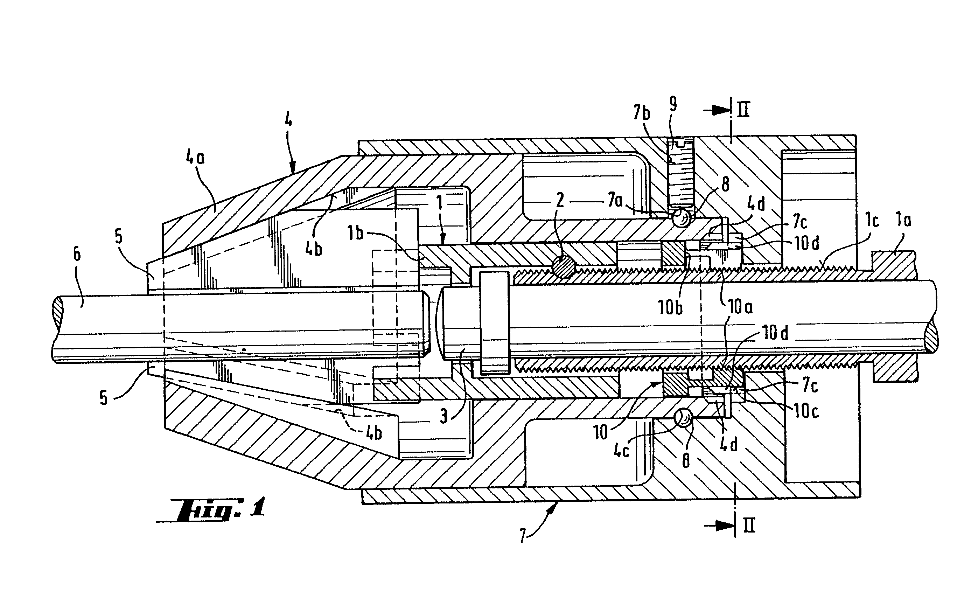

Das erfindungsgemässe Bohrfutter weist einen insgesamt mit 1 bezeichneten Futterkörper auf. Der Futterkörper 1 besteht aus einer Spindelhülse 1a und einer mit dieser über Tangentialstifte 2 verbundenen Backenführung 1b. Die Spindelhülse 1a ist auf ihrer Aussenseite mit einem Gewinde 1c von geringer Steigung versehen. In der Spindelhülse 1a ist ein Döpper 3 axial verschiebbar geführt. Der Futterkörper 1 wird teilweise von einer insgesamt mit 4 bezeichneten Führungshülse umgeben. Die Führungshülse 4 weist einen konischen Bereich 4a mit Führungsnuten 4b für Spannbacken 5 auf. Die Spannbakken 5 dienen dem Festspannen eines Einsteckendes 6 eines Werkzeuges. Die Führungshülse 4 ist über die Backen 5 drehfest, jedoch axial verschiebbar verbunden mit dem Futterkörper 1. Eine insgesamt mit 7 bezeichnete Stellhülse ist mit der Führungshülse 4 drehbar, jedoch axial fest verbunden. Die drehbare Verbindung zwischen der Stellhülse 7 und der Führungshülse 4 erfolgt mittels Kugeln 8, welche im Querschnitt etwa je zur Hälfte in einer Nut 4c in der Führungshülse sowie in einem Einstich 7a in der Stellhülse 7 gelagert sind. Das Einfüllen der Kugeln 8 in die Nut 4c bzw in den Einstich 7a erfolgt durch eine Gewindebohrung 7b in der Stellhülse 7, welche nach dem Einfüllen der Kugeln 8 mittels eines Gewindestifts 9 verschlossen wird. Ein insgesamt mit 10 bezeichnetes Kupplungsglied weist Gewindesegmente 10a auf, welche durch über einen Teil der Länge des Kupplungsgliedes 10 verlaufende Längsschlitze 10b gebildet werden. In der in Fig. 1 dargestellten Stellung befinden sich die Gewindesegmente 10a in Eingriff mit dem Gewinde 1c des Futterkörpers 1. Die Stellhülse 7 ist somit über das Kupplungsglied 10 am Gewinde 1c abgestützt. Zum Festspannen der Spannbacken 5 kann die Stellhülse 7 gegenüber dem Futterkörper 1 verdreht werden.

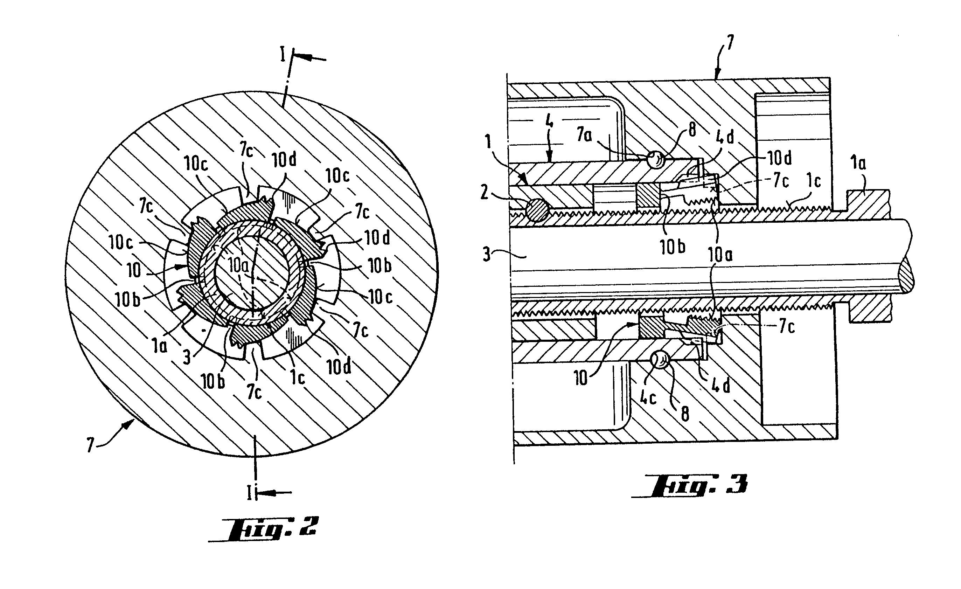

Der in Fig. 2 dargestellte Querschnitt durch das Bohrfutter zeigt den in der Spindelhülse 1a geführten Döpper 3. Die Gewindesegmente 10a des Kupplungsgliedes 10 befinden sich dabei in Eingriff mit dem Gewinde 1c auf der Aussenseite der Spindelhülse 1a. Die Gewindesegmente 10a werden durch die über einen Teil des Kupplungsgliedes 10 verlaufenden Längsschlitze 10b gebildet. Die Gewindesegmente 10a haben die Tendenz, durch die Spannkraft des Kupplungsgliedes 10 radial nach aussen und somit ausser Eingriff mit dem Gewinde 1c zu gelangen. Die Gewindesegmente 10a sind jedoch auf ihrer Aussenseite mit Steuerflächen 10c versehen. Diese Steuerflächen 10c wirken mit Nocken 7c an der Stellhülse 7 zusammen. Beim Verdrehen der Stellhülse 7 im Gegenuhrzeigersinn können die Gewindesegmente 10a durch die Ausbildung der Steuerfläche 10c radial nach aussen rücken und somit ausser Eingriff mit dem Gewinde 1c gelangen.

Diese Stellung ist in Fig. 3 dargestellt. Das Kupplungsglied 10 ist an seiner Aussenseite mit in axialer Richtung verlaufenden Verzahnungen 10d versehen. Die Führungshülse 4 weist an ihrem rückwärtigen Ende innenseitig ebenfalls eine entsprechende, in axialer Richtung verlaufende Verzahnung 4d auf. Das Kupplungsglied 10 gelangt somit einerseits ausser Eingriff mit dem Gewinde 1c und andererseits in Eingriff mit der Verzahnung 4d an der Führungshülse 4. Die Verzahnung 4d, 10d verhindert bei einem Verdrehen der Stellhülse 7 gegenüber der Spindelhülse 1a ein Mitdrehen des Kupplungsgliedes 10. Die Verzahnung 4d dient ausserdem der Mitnahme des Kupplungsgliedes 10 beim axialen Verschieben der Führungshülse 4 mittels der Stellhülse 7. Nachdem die Spannbacken 5 durch dieses Verschieben der Stellhülse 7 in die gewünschte radiale Lage gebracht werden, wird die Stellhülse 7 wiederum im Uhrzeigersinn in die in Fig. 2 dargestellte Stellung zurückgedreht, wobei die Gewindesegmente 10a durch die Nocken 7c radial nach innen gedrückt und mit dem Gewinde 1c in Eingriff gebracht werden.

## Patentansprüche

1. Bohrfutter zur Aufnahme von Werkzeugen (6) in Handgeräten wie Schlagbohrmaschinen, Bohrhämmern und dgl. mit einem an seiner Aussenseite mit Gewinde (1c) von geringer Steigung versehenen Futterkörper (1), einer den Futterkörper (1) teilweise umgebenden Führungshülse (4) für wenigstens zwei im Futterkörper (1) radial verschiebbar gelagerte Spannbacken (5) und einer mittels der Führungshülse (4) dem radialen Verschieben der Spannbacken (5) dienenden Stellhülse (7), welche gegenüber dem Futterkörper (1) axial verstellbar ist, wobei die Stellhülse (7) mittels ein- und auskuppelbaren, ein oder mehrere, in das Gewinde (1c) ein- und aus diesem ausrückbare Gewindesegmente (10a) aufweisenden Kupplungsgliedes (10) über das Gewinde (1c) mit dem Futterkörper (1) verbindbar ist, dadurch gekennzeichnet, dass das Kupplungsglied (10) hülsenförmig ausgebildet ist und durch teilweise Längsschlitzung (10b) als Federelemente wirkende Finger mit den Gewindesegmenten (10a) an deren freien Enden gebildet sind, wobei die Gewindesegmente (10a) durch die Federelemente aus dem Gewinde (1c) des Futterkörpers (11) ausgerückt gehalten werden und die Stellhülse (7) sowie das Kupplungsglied (10) miteinander zusammenwirkende Nocken (7c) und Steuerflächen (10c) aufweisen.

2. Bohrfutter nach Anspruch 1, dadurch gekennzeichnet, dass eine bei ausgekuppeltem Kupplungsglied (10) mit der Führungshülse (4) in Eingriff tretende, als am Kupplungsglied (10) und an der Führungshülse (4) angeordnete, in axialer Richtung verlaufende Verzahnung (4d, 10d) ausgebildete Verbindungseinrichtung vorgesehen ist.

## Revendications

1. Mandrin porte-foret pour la fixation d'outils (6) dans des appareils à main tels que des perceuses à percusion, des marteaux perforateurs et analogues, comprenent un corps de mandrin (1) portant sur sa face extérieure un filetage (1c) à faible pas, une douille de guidage (4) enveloppant partiellement le corps de mandrin (1) et destinée à recevoir au moins deux mâchoires de serrage (5) montées dans le corps de mandrin (1) de façon à pouvoir être déplacées dans le sens radial, et une douille de réglage (7) destinée au déplacement radial des mâchoires de serrage (5) au moyen de la douille de guidage (4) et pouvant être déplacée axialement par rapport au corps de mandrin (1), la douille de réglage (7) pouvant être couplée avec le corps de mandrin (1) par l'intermédiaire du filetage (1c) au moyen d'un organe d'accouplement (10) embrayable et débrayable muni d'un ou de plusieurs segments filetés (10a) qui peuvent être mis en prise avec le filetage (1c) et dégagés de celui-ci, caractérisé en ce que l'organe d'accouplement (10) est conformé en douille et que des fentes longitudinales partielles (10b) forment des doigts agissant comme éléments élastiques et présentant à leurs extrémités libre les segments filetés (10a), les segments filetés (10a) étant maintenus par les éléments élastiques dans une position dégagée du filetage (1c) du corps de mandrin (1) et la douille de réglage (7) ainsi que l'organe d'accouplement (10) comportant des cames (7c) et des surfaces de commande (10c).

2. Mandrin porte-foret selon la revendication 1, caractérisé en ce qu'il comprend un dispositif de liaison qui est mis en prise avec la douille de guidage (4) lorsque l'organe d'accouplement (10) est débrayé, et réalisé sous la forme d'une denture (4d, 10d) disposée sur l'organe d'accouplement (10) et sur la douille de guidage (4) et orientée dans le sens axial.

## Claims

1. A drill chuck for the reception of tools (6) in hand appliances such as percussion drilling machines, hammer drills and the like, with a chuck body (1) which is provided on its outside with a thread (1c) of slight pitch, a guide sleeve (4), partially surrounding the chuck body (1), for at least two clamping jaws (5) which are mounted so as to be radially displaceable in the chuck body (1), and an adjusting sleeve (7) which by means of the guide sleeve (4) serves for the radial displacement of the clamping jaws (5) and which is axially adjustable relative to the chuck body (1), the adjusting sleeve (7) being connectable by way of the thread (1c) to the chuck body (1) by means of a clutch member (10) which can be coupled in and out and which has one or more threaded segments (10a) which are engageable into the thread (1c) and disengageable therefrom, characterised in that the coupling member (10) is sleeve-shaped in design which by partial longitudinal slotting (10b) forms fingers acting as spring elements and having the threaded segments (10a) at their free ends, in which respect the threaded segments (10a) are kept disengaged from the thread (1c) of the chuck body (1) by the spring elements, and the adjusting sleeve (7) as well as the coupling member (10) have mutually co-operating cams (7c) and control surfaces (10c).

2. A drill chuck according to claim 1, characterised in that a connection mechanism is provided which enters into engagement with the guide sleeve (4) when the coupling member (10) is disengaged and which is designed as a toothing (4d, 10d) which is arranged on the coupling member (10) and on the guide sleeve (4) and extends in the axial direction.

Fig. 1

**Fig. 3**

**Fig. 2**

2